# EUROPEAN PATENT APPLICATION

(11) **EP 1 518 637 A1**
(43) Date of publication of application: **30.03.2005**
(21) Application number: 03021842.4
(22) Date of filing: 26.09.2003
(51) Int. Cl.: B23P 6/00, B23P 19/02, F28F 11/00, F22B 37/00

(54) **Apparatus and method for the repair of heat exchangers, especially for the repair of heat exchanger tubings**

(71) Applicant: Saudi Basic Industries Corporation, Riyadh 11422 (SA)
(72) Inventor: Leoni, Carlo, c/o Ibn Zahr, Jubail-Industrial City 31961 (SA)
(74) Representative: Winkler, Andreas, Dr.

(57) **Abstract**

The invention relates to an apparatus (1) for the repair of heat exchanger tubings the tubing ends of which being embedded in a tube sheet and, if required, are projecting from the outer face of the tube sheet, comprising
a) at least two spaced apart rigid essentially vertical first support means (2,4)
b) a second support means (6), being moveably connected to each of the first vertical support means (2,4)
c) at least one mobile boring unit (8) being moveably mounted to the second support means (6) between those positions (10,12) where the second support means (6) is moveably connected to each first support means (2,4), and comprising
   - i): at least one drilling unit (14) being moveably mounted to the boring unit (8) and having a drilling means (16) which is adapted to face the outer face of a tube sheet of a heat exchanger, and
   - ii): a moving unit (18) for the movement of the boring unit along the second support means (6).

## Description

The present invention also relates to an apparatus and a method for the repair or replacement of heat exchanger tubings as well as to the use of the apparatus according to the invention for the repair of U-bundle heat exchangers, floating head heat exchangers and fix tube sheet heat exchangers.

The maintenance of heat exchangers plays a major role in guaranteeing a perfect performance of these devices over prolonged period of times. As heat exchangers usually comprise a multitude of tubings the efficiency of these heat exchangers mainly depends on an unimpaired functioning of all tubings. During operation in these tubings quiete often corrosion does occur which is one of the major reasons for failure of heat exchangers. Then, the re-tubing of the heat exchanger becomes a gradually increasing need. Known methods for the re-tubing of heat exchangers, for example of U-bundle heat exchangers, utilize tube cutting and extracting machines which are regularly very expensive and in some cases might even cause damages to the tube sheet, especially to the tube sheet expansion grooves, of the heat exchanger. These known repair methods require skilled technicians and also a lot of special and heavy equipment. Also, at least two to three technicians are regularly needed for the replacement work. Apart from the fact that the existing methods and tools for the repair and replacement of tubings of heat exchangers are rather imprecise, expensive and time consuming, they are also very inflexible and do not allow to be modified or supplemented in order to also function other needs.

Therefore, the problem underlying the present invention has been to find a reliable, inexpensive, flexible and easy to handle device for the repair of heat exchangers.

This problem has been solved by an apparatus for the repair of a heat exchanger, especially for the repair and/or replacement of heat exchanger tubings, the tubing ends of which being embedded in a tube sheet and, if required, are projecting from the outer face of the tube sheet, comprising
a) at least two spaced a part rigid essentially vertical first support means,
b) a second support means, being moveably connected to each of the first vertical support means,
c) at least one mobile boring unit being moveably mounted to the second support means between those positions where the second support means is moveably connected to each first support means, and comprising
   i) at least one drilling unit being moveably mounted to the boring unit and having a drilling means which is adapted to face the outer face of a tube sheet of a heat exchanger, and
   ii) a moving unit for the movement of the boring unit along the second support means.

Tubing ends of a heat exchanger are usually fixed in a tube sheet. The front face of this tube sheet faces the distributor section of a heat exchanger. The tube sheet is thus separating the distributor section from that part of the heat exchanger where the tubings are located. Fluid can be introduced into the tubings via the open tubing ends fixed in the tube sheet. These tubing ends usually are projecting from the front face of the tube sheet, e.g. by a few mm. With the apparatus according to the invention a drilling unit can be easily positioned in front of said tubing ends. With the aid of a drilling means the inner diameter of the tubing end can be enlarged thereby especially forming a stepwise transition from the enlarged diameter to the usual diameter of the tubing end. The ridge or edge being formed by such a drilling operation can then be used as a hitting surface against which for example a hammer head can be operated. By such a hammering action the tubing can be released from the tube sheet to which it is usually fixedly attached.

According to another embodiment the first support means of the apparatus comprises an essentially vertically orientated column.

Also, provisions can be made that at least one, in particular both, first support means comprises at least one vertical guide mounted to or separate from the first support means, each being in particular disposed to the opposite endings of the second support means. Such a vertical guide aids a smooth vertical movement of the second support means and prevents for example a pendulous movement.

In another embodiment of the invention the first support means comprises an additional, separate guiding column and the second support means comprises at least two indentations or holes being disposed at opposite parts of the second support means and which are each partially or completely surrounding a guiding column. With the use of such guiding columns the second support means, e.g. in the form of a horizontal bench, can be merely restricted to a vertical up- and downward movement.

Thus, the second support means can be essentially horizontally orientated, especially in the form of a horizontal bench, and can be adapted to travel up and down via an automatically or manually operated device.

Further, in one embodiment of the present invention the device comprises a pneumatically, hydraulically, electrically or manually, in particular in the form of a pulley or chain-block, driven lifting and lowering device.

According to another aspect of the present invention the boring unit further comprises at least one transversal moving unit, which is adapted to place the drilling unit in front of a tubing end, and/or a longitudinally moving unit, which is adapted to move the drilling unit towards and away from the tubing ends and/or to push the tubing end after having been manipulated by the drilling unit of said apparatus out of the tube sheet.

Provisions are being made that the moving unit of the boring unit is a trolley onto which the drilling unit is mounted.

In one embodiment of the invention the moving unit and/or the drilling unit is/are pneumatically, hydraulically, electrically or manually driven.

Furthermore, the drilling means of the drilling unit can comprise a drill, in particular adapted to act as a tube wall reducing tool, a tube end facing tool, a tool for seal welding removal, a tool for strength welding removal and/or a hammering tool, in particular an impact hammer.

In order to place the drilling means accurately and reliably into the tube ending the drill, the tube end facing tool, the tool for seal welding removal and the tool for strength welding removal can comprise a tool guide at its front part. Such a tool guide preferably has a cylindrical shape and has a diameter which is only marginally smaller than that of the tube ending prior to the drilling process.

According to another embodiment the apparatus according to the invention further comprises at least one trolley for carrying, adjusting and fixing the position of a supposed heat exchanger to be repaired.

Also, for the movement of the trolley a runway, in particular in the form of rails, can be provided.

In addition, the apparatus according to one of the preceding claims can further comprise at least one pulling means, in particular a winch, being located behind a heat exchanger to pull a tubing from the tube sheet. In particular, in order to support the movement of the tubing by hammering onto the ridge inside the tube ending as explained above the pulling action of a winch can be helpful. E.g., the tube to be replaced is connected to the winch via a rope.

Thus, the apparatus according to the invention can further comprise a pushing means, in particular in the form of an impact hammer, which comprises a hammer head which is adapted to be incorporated into the tubing end after having been widened by the drilling unit. Such a pushing or hammering means should best be provided with a front surface which corresponds in its form to the inner ridge being formed by the drilling action.

In another embodiment the trolley for carrying the heat exchanger comprises an adjustable flat bed for positioning and/or fixation of the heat exchanger.

According to another aspect of the present invention the problem underlying this invention can be solved by a method for the repair of a heat exchanger, in particular of heat exchanger tubings, comprising the steps of
a) providing at least one apparatus according to the present invention,
b) providing a heat exchanger at least one tube of which is to be replaced which comprises a tube sheet and a multitude of tubings, the ends of which are at least partially, in particular completely, embedded/located in the tube sheet,
c) placing the outer face of the tube sheet of the heat exchanger in front of said apparatus, especially by moving said apparatus towards the outer face of a tube sheet and/or by moving the heat exchanger towards the apparatus so that they are directing towards each other,
d) placing a drilling unit of the apparatus in front of a tubing end so that the axis of the tubing at least at the tube sheet and the axis of the drilling means of the drilling unit are essentially in parallel, in particular coinciding, and wherein the diameter of the drilling means, in particular of a drill, is chosen as such that it is bigger than the inner diameter of the tubing end and smaller than the outer diameter of said tubing end,
e) if required, placing a tool guide of the drilling unit into the tubing end,
f) drilling the drilling means into the tubing end, thereby enlarging the inner diameter of said tubing end, in particular for a distance around the width of the tube sheet, in particular by moving the heat exchanger towards the apparatus, by moving the apparatus towards the heat exchanger and/or by moving the longitudinally moving unit towards the heat exchanger tubings,
g)
   i) applying a pushing force onto the tubing and via the drilling means of the drilling unit and/or applying a pulling force to the tubing with a pulling means, in particular a winch, being located in the area behind the tube sheet and behind the heat exchanger, thereby removing the tubing from the tube sheet, or
   ii) removing the drilling unit from the enlarged bore hole formed in the tubing end,
      introducing a pushing means, in particular a hammer head of an impact hammer, into the tubing end, having a diameter greater than the inner diameter of the tubing end before the drilling operation and smaller than or equal to the diameter of the tubing end after the drilling operation of step f),
      applying a pushing force onto the tubing via the pushing means and/or applying a pulling force to the tubing with a pulling means, in particular a winch, being located in the area behind the tubing sheet and behind the heat exchanger, thereby removing the tubing from the tube sheet.

Another method for the repair of a heat exchanger, in particular of heat exchanger tubings, which is also according to the present invention comprises
the steps a) to f) as outlined above, and further comprises the following steps
g') removing the drilling unit from the tubing end after having completed the drilling process to enlarge the tubing end,
h') moving the boring unit to another tubing end, in particular an adjacent tubing end and/or, if the tubing end being enlarged in steps a) to f) is part of a U-tube, moving the boring unit to the corresponding tubing end of this U-tube, by moving the second support means up or down and/or by moving the boring unit laterally along the second support means,
i') placing the drilling unit of apparatus in front of a tubing end so that the axis of the tubing at least at the tube sheet and the axis of the drilling means of the drilling unit are essentially in parallel, especially coinciding, and wherein the diameter of the drilling means, in particular of a drill, is chosen as such that it is bigger than the inner diameter of the tubing end and smaller than the outer diameter of said tubing end,
j') if required, placing the tool guide of the drilling unit into the tubing end,
k') drilling the drilling means into the tubing end, thereby enlarging the inner diameter of said tubing end, in particular for a distance around the width of the tube sheet, in particular by moving the heat exchanger towards the apparatus, by moving the apparatus towards the heat exchanger and/or by moving the longitudinally moving unit towards the heat exchanger tubings,
l')
   i) applying a pushing force onto the tubing and via the drilling means of the drilling unit and/or applying a pulling force to the tubing with a pulling means, in particular a winch, being located in the area behind the tube sheet and behind the heat exchanger, thereby removing the tubing from the tube sheet, or
   ii) removing the drilling unit from the enlarged bore hole formed in the tubing end,
      introducing a pushing means, in particular a hammer head of an impact hammer, into the tubing end, having a diameter greater than the inner diameter of the tubing end before the drilling operation and smaller than or equal to the diameter of the tubing end after the drilling operation of step f),
      applying a pushing force onto the tubing via the pushing means and/or applying a pulling force to the tubing with a pulling means, in particular a winch, being located in the area behind the tubing sheet and behind the heat exchanger, thereby removing the tubing from the tube sheet.

Furthermore, in another embodiment the methods according to the present invention further comprise the step of introducing a new or repaired tubing into the tubing sheet at a tubing sheet hole being generated by removing a tubing which is to be replaced or repaired.

In a preferred embodiment a new or repaired tubing is introduced into the tube sheet such that its ending projects from the front face of tube sheet, especially by a unified predetermined distance.

According to another preferred embodiment a predetermined, in particular unified, distance by which the tubing ends project from the front face of the tube sheet is achieved by applying an apparatus according to the present invention comprising a tube end facing tool with which the length of the tube ending projecting from the tube sheet can be reduced.

Also, provisions can be made that the tube end facing tool comprises a tool guide at its front part which is introduced into the tubing end, and the tube end facing tool is moved towards the tube end until in contact therewith and part of the tube end is eliminated or removed by the tube end facing tool, in particular via a rotational movement, until that part of the tube end which projects from the front face of the tube sheet has a predetermined length.

Another method for the repair of a heat exchanger, which comprises a tube sheet comprising a multitude of tubing ends therein at least one of which projects from the front face of the tubing sheet and comprises a seal welding, which is also according to the invention additionally comprises between steps c) and d) as of the aforementioned inventive methods the following steps:
c₁) placing the drilling unit which comprises a tool for seal welding removal in front a tube end, if necessary placing a tool guide of the tool for seal welding removal into the tube end,
c₂) directing the tool for seal welding removal towards the tube sheet, thereby eliminating/removing the seal welding which seals the tube and which projects from the front face of the tube sheet as well as said part of the tube end which projects from the front face of the tube sheet, in particular by a rotational movement of the tool for seal welding removal when in contact with the seal welding and/or that part of the tube end which projects from the front face of the tube sheet,
c₃) removal of the tool for seal welding removal after completion of seal welding removal,
c₄) replacing the tool for seal welding removal of the drilling unit by a drill, and
commencing with the steps which follow step c) in one of the aformentioned methods according to the invention.

In another embodiment of the present invention a method for the repair of a heat exchanger, which comprises a tube sheet comprising a multitude of tubing ends therein at least one which comprises a strength welding being at least partially embedded in the front face of the tube sheet is provided which additionally comprises between steps c) and d) of the aforementioned inventive methods the following steps:
c₁₁)placing the drilling unit which comprises a tool for strength welding removal in front of a tube end, if necessary placing a tool guide of the tool for strength welding removal into the tube end,
c₂₂)directing the tool for strength welding removal towards the front face of the tube sheet, in particular with a rotational movement,
c₃₃)eliminating the strength welding, which is at least partially embedded in the front face of the tube sheet around the tube end, in particular by a rotational movement of the tool for strength welding removal,
c₄₄)removal of the tool for strength welding removal after completion of the removal of the strength welding,
c₅₅)replacement of the tool for strength welding removal by a drill, and
commencing with the steps which follow step c) in any one of the aforementioned inventive methods.

The apparatus according to the present invention can be well used, for example, for the repair of U-bundle heat exchanger, flouting head heat exchanger and/or fix tube sheet heat exchanger. With this apparatus the replacement of all the tubes of a heat exchanger re-utilizing for example the bundle structure (tube sheets, baffles, tie rods and spacers) can be achieved.

The present invention is based on the surprising perception that the repair of heat exchangers, in particular the replacement of tubings of these heat exchangers can be highly facilitated by use of an apparatus according to the present invention. This apparatus allows for an easy, reliable and precise adjustment of a drilling unit in front of the tubing end located in a tube sheet of a heat exchanger. Also, the apparatus according to the invention is easy to fabricate and can be applied by a single operator. In addition, another advantage resides on the fact that the apparatus according to the invention can be utilized for in total three different phases of the re-tubing process, still requiring only a single operator. Furthermore, there are no weights to be hand carried by the operator and full safety is assured during all working phases. By the use of the apparatus according to the invention no pollution will be generated, thereby protecting the environment.

Further aspects of the invention will be understood from the following detailed description accompanying the drawings, in which
- Figure 1: is a front view of an apparatus according to the invention,
- Figure 2: is a front view of an apparatus according to the invention as depicted in figure 1, also showing a heat exchanger which is to be repaired,
- Figure 3: is a cross-sectional view of portions of the first and second support means of the apparatus according to the invention,
- Figure 4: is a top cross-sectional view of the embodiment of figure 3,
- Figure 5: is a cross-sectional view of the mobile boring unit of the apparatus according to the invention,
- Figure 6: is a front view of the mobile boring unit of the apparatus according to the invention,
- Figure 7: is a cross-sectional view of the drilling unit of the apparatus according to the invention,
- Figure 8: is a cross-sectional view of a section of the tubings of a heat exchanger, also depicting a tool for seal welding removal as part of the apparatus according the invention,
- Figure 9: represents a cross-sectional view of a section of the tubings of a heat exchanger, also depicting a tool for strength welding removal as part of the apparatus according to the invention,

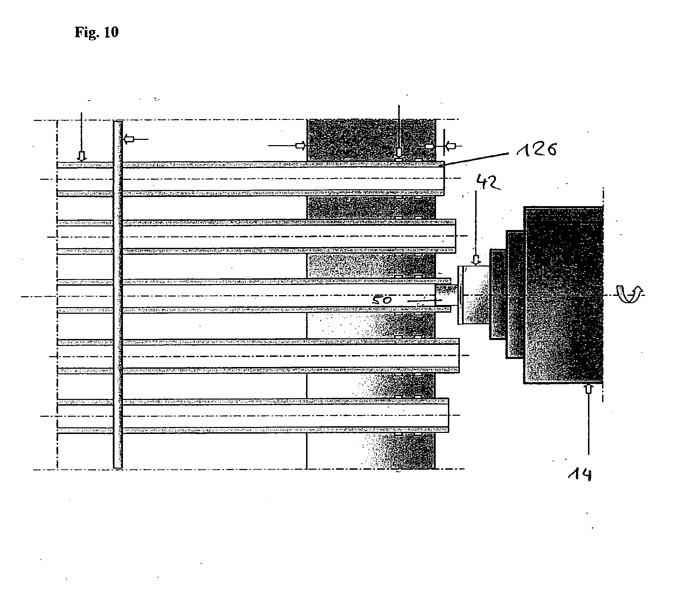

- Figure 10: depicts a cross-sectional view of a section of the tubings of a heat exchanger, also showing a tube end facing tool as part of the apparatus of the present invention, and
- Figure 11: is a partial cross-sectional side view of a portion of the apparatus according to the invention.

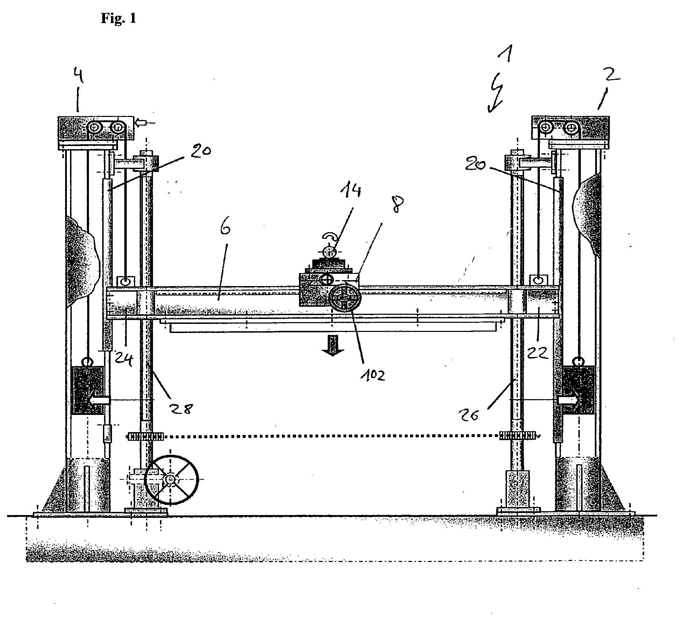

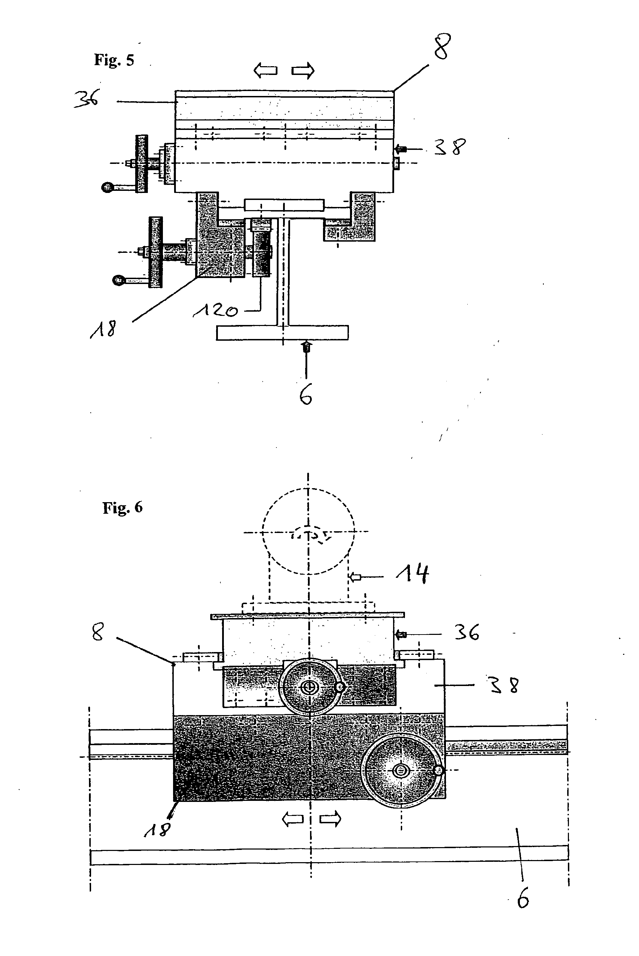

In Fig. 1 an apparatus 1 according to the invention is shown comprising two first vertical support means 2 and 4 as well as a second support means 6 and a boring unit 8. The second support means 6 is designed as a horizontal bench in the form of an H-beam (s.a. Fig. 5) and is connected to the columns of the first support means 2 and 4 at its opposite endings 22 and 24 via a rope which is fixed to lifting lugs 140 at the aforementioned endings. These ropes are connected to respective counterweights positioned within columns 2 and 4, the rope being led over a counterweight rope mechanism positioned at the top of each first support means 2 and 4. Onto the horizontal bench 6 a movable boring unit 8 is mounted which can be laterally shifted by a hand wheel 102. On top of the boring unit 8 the drilling unit 14 is mounted. Two guiding columns 26 and 28 are used to safeguard that the horizontal bench 6 is restricted only to an upward and a downward movement, but not to any lateral movements in itself, thereby stabilizing the entire apparatus 1 of the invention.

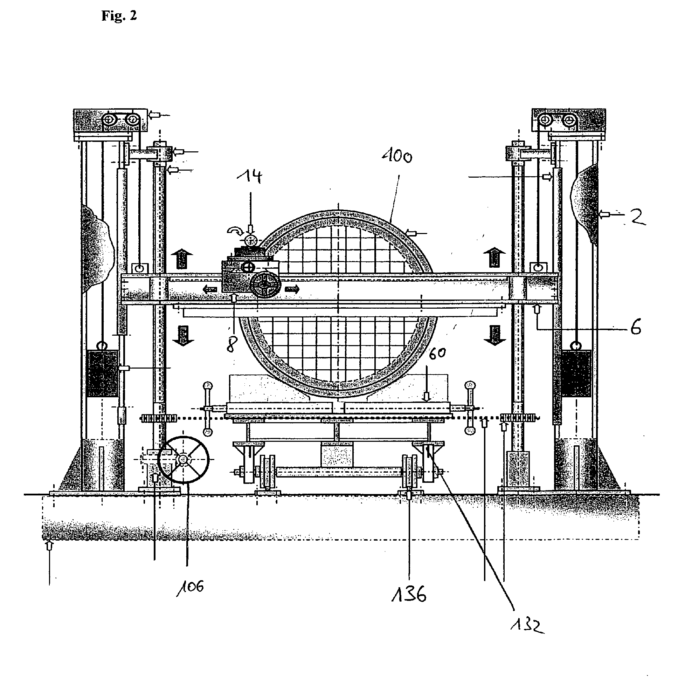

In Fig. 2 in addition to the features of the apparatus 1 according to the invention already depicted in Fig. 1 also the front face of a heat exchanger 100 can be seen, which is carried by a trolley. The trolley comprises an adjustable flat bed 60 for positioning and fixing the heat exchanger 100 and also wheels to be run on rails 136. The front face of the heat exchanger 100 comprises a multitude of tubing ends (not shown) which are open and usually located within the distributor section of a heat exchanger. By combining the vertical movement of the horizontal bench 6 and the lateral/horizontal movement of the mobile boring unit 8 every position and every tubing end of the tube sheet at the front face of the heat exchanger 100 is accessible. Apart from these sophisticated adjustment means a more coarse positioning adjustment can be obtained by using the adjustable flat bed. For the vertical adjustment of horizontal bench 6 a manually operated wheel 106 can be used.

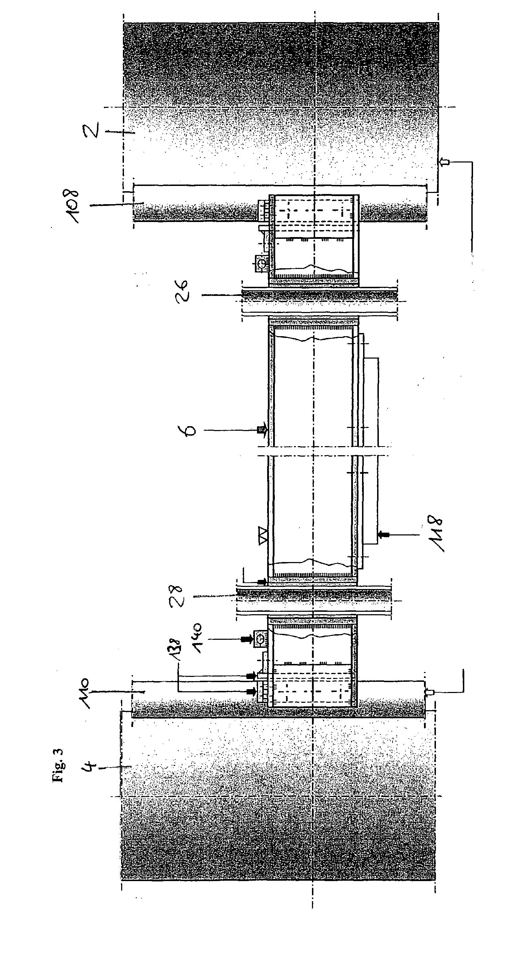

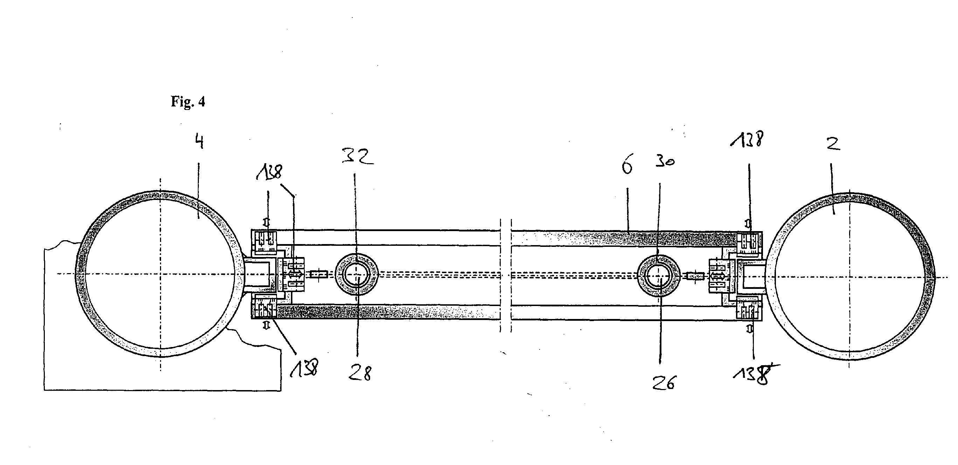

In Fig. 3 a cross-sectional view of a section of the horizontal bench 6 and adjacent vertical columns 2 and 4 can be seen. In order to obtain a reliable and smooth vertical movement of the horizontal bench 6 both vertical columns 2 and 4 are provided with vertical guiding elements 108 and 110. These guiding elements ensure a very controlled up- and downward movement of the horizontal bench 6, as can also be derived from Fig. 4. By the use of adjustable bronze jibs 138 even a fine tuning is possible. Two holes 30 and 32 at opposite side of the horizontal bench are provided for receiving the guiding column 26 and 28. The inner diameter of these holes 30 and 32 can be provided with a steel or bronze bushing in order to ensure a very smooth movement of the horizontal bench. According to one embodiment of the present invention the horizontal bench 6 can be reinforced by an addition bar 118 positioned between both guiding columns 26 and 28.

From Fig. 5 a cross-sectional view of the movable boring unit 8 can be derived. This boring unit comprises a longitudinally moving unit 38, also called longitudinal slide, and a transversally moving unit 36, also called transversal slide (s. a. Fig. 6), as well as moving unit 18 which is connected to the horizontal bench 6. The movement of the boring unit 8 can be achieved by use of a transmission gear 120 which is in direct contact with a downwardly facing portion of the horizontal bench 6. By use of the longitudinal slide 38 the drilling unit (as depicted in phantoms in Fig. 6) can be moved towards the tube sheet of a heat exchanger. This can be achieved manually by use of a hand wheel as depicted in Fig. 5. To be able to adjust the position of the drilling unit 14 rather precisely the transversal movement of the boring unit 8 can be adjusted by use of the transversal slide 36.

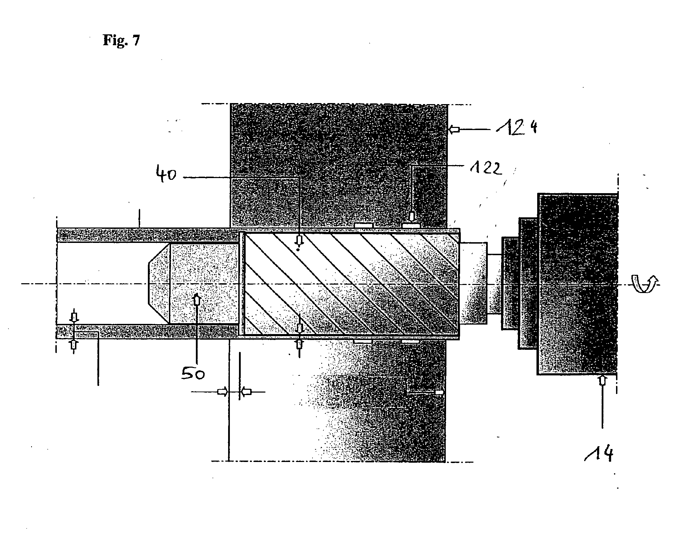

In Fig. 7 a cross-sectional view of a section of a tube sheet 124 of a heat exchanger showing only one tube ending can be seen. The size or diameter of the drill 40 of the drilling unit 14 has been chosen as such that the original tube wall thickness has been reduced by about 75%. To guarantee an even and centered movement of the drill 40 a tool guide 50 is used the diameter of which essentially corresponds to the inner diameter of the tube ending, i.e. is marginally smaller than that of the inner diameter of the tube ending. By reducing the tube thickness via drill 40 no damage of the expansion grooves 122 of the tube sheet 124 does occur. The drill 40 is part of the drilling unit 14 being mounted onto the boring unit 8.

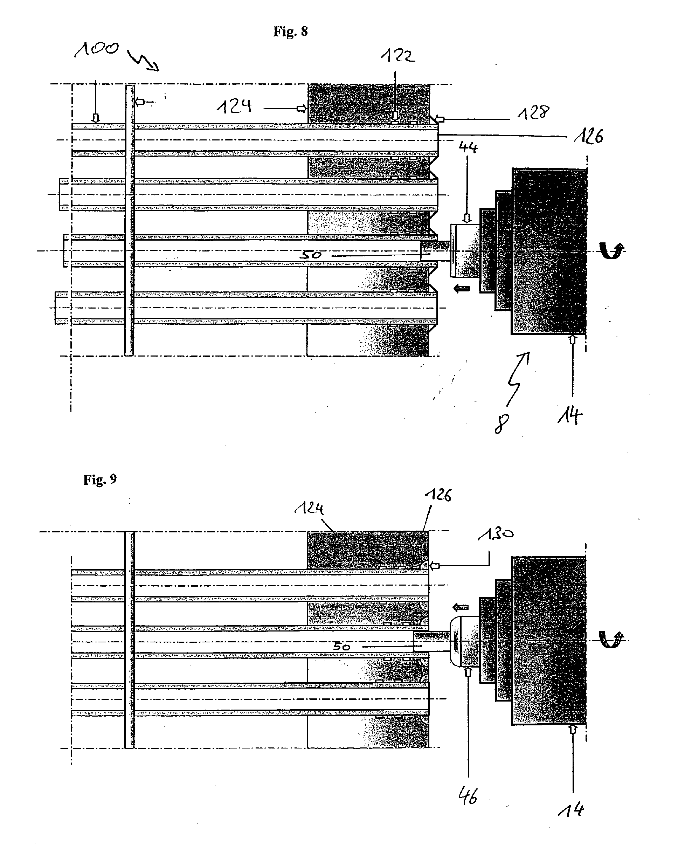

In Fig. 8 a cross-sectional view of a section of the tubings of heat exchanger 100 is depicted. All tubing ends 126 are projecting from the front face of the tube sheet 124 and are sealed by a seal welding 128. In order to be able to remove these tubes the seal welding 128 has to be moved at first. This is achieved by use of apparatus 1 of the present invention the boring unit 8 of which comprises a tool for seal welding removal 44 as part of the drilling unit 14. The tool guide 50, once introduced into the tube ending 126, will lead the tool 44 directly to that part of the tube end which projects from the front face of the tube sheet 126. The front part of the tool for seal welding removal 44 is arranged as such that it will eliminate or erase the seal welding as well the projecting front part of the tube ending up to the plane of the front part of the tube sheet 124. In this way the tube endings 126 are released from the seal welding and can thereby be removed from the tube sheet and the heat exchanger according to the method of the present invention by use of apparatus 1 as described above.

Similar to the removal of seal weldings by a tool for seal welding removal 44 a strength welding, which is embedded within the front part of the front face of a tube sheet 124 of a heat exchanger, can be removed by a respective tool for strength welding removal 46 as depicted in Fig. 9. Again, the tube ending 126 is released from a welding 130 and can thereafter be removed by use of apparatus 1 as described above. After the tool guide 50 has been incorporated into the tube ending 126 the tool for strength welding removal 46 is moved towards the front face of the tube sheet 124 and the tool 46 which is preferably adapted in its size and form to the strength welding embedded in the tube sheet is eliminated or erased.

The apparatus 1 according to the invention can not only be used for pre-removal process steps and for removal process steps, but also for the after treatment of new or repaired tubings after having been incorporated into the tube sheet 124. In general, it is preferred that the tube endings 126 project from the front face of the tube sheet 124 by a unified distance, which can for example be around 3 mm. However, as it is not always possible to introduce new or repaired tubings into the tube sheet which such a precision the length of the tube endings projecting from the front face of the tube sheet can be reduced by use of a tube end facing tool 42. Also, this tube end facing tool 42 in order to function optimally is equipped with a tool guide 50. Similar to the embodiments depicted in Fig. 8 and 9 the tube end facing tool 42 is part of the drilling unit 14. As soon as the front face of the tube and facing tool 42 is in contact with the tube ending 126 the latter will be reduced in length due to the design of tool 42 which is rotating and due to the forward movement of the above drilling unit 14.

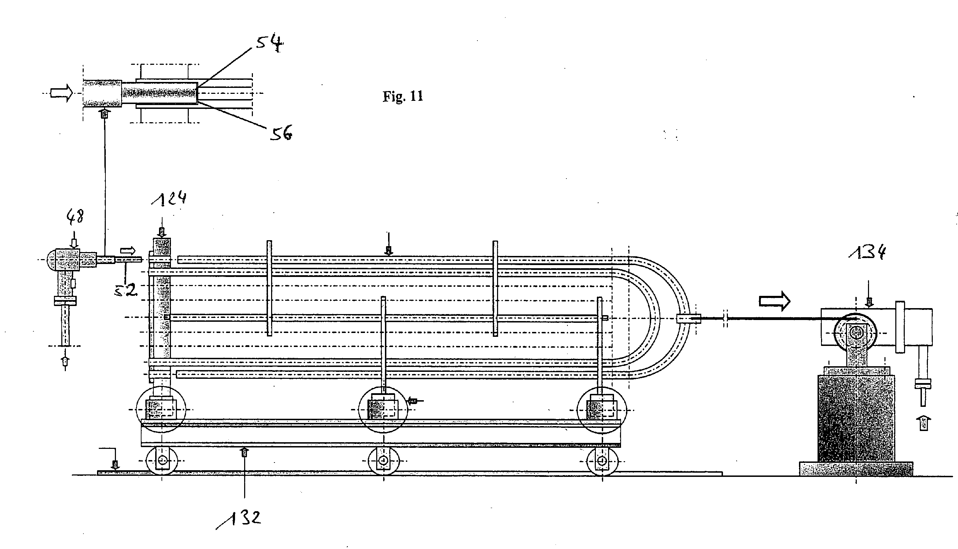

Finally, in Fig. 11 a portion of the apparatus 1 according to the invention can be seen from its side depicting also trolley 132 and a winch 134 which is connected to the U-tube to be replaced by a rope opposite the tube sheet 124. The removal of the U-tube is achieved by use of an impact hammer 48 having a hammer head 50 which fits into the enlarged tubing end 126 which has a bigger inner diameter than the original inner diameter of the U-tube to be replaced. Thus, there is a horizontal surface or edge in the inner tubing against which the front part 52 of the hammer head 50 can be hit. By pouncing the impact hammer 48 against the inner edge 54 of the U-tube said tube can be replaced or pushed out of the tube sheet 124. This replacement can be supported by use of the aforementioned winch 134, e.g. by an air winch. During the above described removal of the U-tube the trolley 132 should be fixed so that it cannot be moved. Also, in one embodiment the impact hammer can be part of the boring unit 8, and can, for example, replace the drill 40 after having enlarged the inner diameter of the tubing end 126. By using the boring unit 8 also for the impact hammer 48 an ideal adjustment of the hammer head 50 in front of the tube sheet 124 and within the enlarged tubing end can be accomplished, thereby minimizing any damage to the tube sheet and/or the expansion grooves.

The features disclosed in the description, the figures as well as the claims could be essential alone or in every combination for the realization of the invention in the different embodiments.

### Reference list

- 1: apparatus for the repair of heat exchanger tubings
- 2: first support means
- 4: first support means
- 6: second support means
- 8: mobile boring unit
- 10: position at an outer end of the second support means
- 12: position at the outer end of the second support means
- 14: drilling unit
- 16: drilling means
- 18: moving unit
- 20: vertical guiding means
- 22: opposite ending of second support means
- 24: opposite ending of second support means
- 26: guiding column
- 28: guiding column
- 30: hole in second support means
- 32: hole in second support means
- 34: lifting device
- 36: transversally moving unit
- 38: longitudinally moving unit
- 40: drill
- 42: tube end facing tool
- 44: tube for seal welding removal
- 46: tool for strength welding removal
- 48: hammering tool
- 50: tool guide
- 52: hammer head
- 54: front part of hammer head
- 56: inner edge of tubing end
- 60: adjustable flat bed
- 100: heat exchanger
- 102: counter weight
- 104: counter weight
- 106: hand wheel
- 108: vertical guiding element
- 110: vertical guiding element
- 118: reinforcing bar
- 120: transmission gear
- 122: expansion grooves
- 124: tube sheet
- 126: tubing ends
- 128: seal welding
- 130: strength welding
- 132: trolley
- 134: winch
- 136: run way
- 138: adjustable jibs
- 140: lifting lug

## Claims

1. Apparatus (1) for the repair of heat exchanger tubings the tubing ends of which being embedded in a tube sheet and, if required, are projecting from the outer face of the tube sheet, comprising
a) at least two spaced apart rigid essentially vertical first support means (2, 4),
b) a second support means (6), being moveably connected to each of the first vertical support means (2, 4),
c) at least one mobile boring unit (8) being moveably mounted to the second support means (6) between those positions (10, 12) where the second support means (6) is moveably connected to each first support means (2, 4), and comprising
i) at least one drilling unit (14) being moveably mounted to the boring unit (8) and having a drilling means (16) which is adapted to face the outer face of a tube sheet of a heat exchanger, and
ii) a moving unit (18) for the movement of the boring unit along the second support means (6).

2. Apparatus (1) according to claim 1, wherein
the first support means (2, 4) comprises an essentially vertically orientated column.

3. Apparatus (1) according to claim 1 or 2, wherein
at least one, in particular both, first support means (2, 4) comprises at least one vertical guide (20, 108, 110) mounted to or separate from the first support means (2, 4), each being in particular disposed to the opposite endings (22, 24) of the second support means (6).

4. Apparatus (1) according to one of the preceding claims, wherein
the first support means (2, 4) comprises an additional, separate guiding column (26, 28) and wherein the second support means (6) comprises at least two indentations or holes (30, 32) being disposed at opposite parts of the second support means (6) and which are each partially or completely surrounding a guiding column (26, 28).

5. Apparatus (1) according to one of the preceding claims, wherein
the second support means (6) is essentially horizontally orientated, especially in the form of a horizontal bench, and is adapted to travel up and down via an automatically or manually operated device (34).

6. Apparatus (1) according to claim 5, wherein
the device (34) comprises a pneumatically, hydraulically, electrically or manually, in particular in the form of a pulley, driven lifting and lowering device.

7. Apparatus (1) according to one of the preceding claims, wherein
the boring unit (8) further comprises at least one transversal moving unit (36), which is adapted to place the drilling unit (14) in front of a tubing end, and/or a longitudinally moving unit (38), which is adapted to move the drilling unit (8) towards and away from the tubing ends and/or to push the tubing end after having been manipulated by the drilling unit (14) of said apparatus (1) out of the tube sheet.

8. Apparatus (1) according to one of the preceding claims, wherein
the moving unit (18) of the boring unit (8) is a trolley onto which the drilling unit (14) is mounted.

9. Apparatus (1) according to one of the preceding claims, wherein
the moving unit (18) and/or the drilling unit (14) is/are pneumatically, hydraulically, electrically or manually driven.

10. Apparatus (1) according to one of the preceding claims, wherein
the drilling unit (14) comprises a drill (40), adapted to act as a tube wall reducing tool, a tube end facing tool (42), a tool for seal welding removal (44), a tool for strength welding removal (46) and/or a hammering tool (48), in particular an impact hammer.

11. Apparatus (1) according to claim 10, wherein
the drill (40), the tube end facing tool (42), the tool for seal welding removal (44) and the tool for strength welding removal (46) comprise a tool guide (50) at its front part.

12. Apparatus (1) according to one of the preceding claims, further comprising
at least one trolley (132) for carrying, adjusting and fixing the position of a supposed heat exchanger to be repaired.

13. Apparatus (1) according to one of the preceding claims, further comprising
a runway (136), in particular in the form of rails, for the movement of the trolley (132).

14. Apparatus (1) according to one of the preceding claims, further comprising
at least one pulling means (134), in particular a winch, being located behind a heat exchanger to pull a tubing from the tube sheet.

15. Apparatus (1) according to one of the preceding claims, further comprising
a pushing means (48), in particular in the form of an impact hammer, which comprises a hammer head which is adapted to be incorporated into the tubing end after having been widened by the drilling unit (14).

16. Apparatus (1) according to one of claims 12 to 15, wherein
the trolley (132) comprises an adjustable flat bed (60) for positioning and/or fixation of the heat exchanger.

17. Method for the repair of a heat exchanger, in particular of heat exchanger tubings, comprising the steps of
a) providing at least one apparatus (1) according to one of claims 1 to 16,
b) providing a heat exchanger at least one tube of which is to be replaced which comprises a tube sheet (124) and a multitude of tubings, the ends of which are at least partially, in particular completely, embedded/located in the tube sheet,
c) placing the outer face of the tube sheet of the heat exchanger in front of said apparatus (1), especially by moving said apparatus (1) towards the outer face of a tube sheet and/or by moving the heat exchanger towards the apparatus (1) so that they are directing towards each other,
d) placing a drilling unit (14) of the apparatus (1) in front of a tubing end so that the axis of the tubing at least at the tube sheet and the axis of the drilling means (16) of the drilling unit (14) are essentially in parallel, in particular coinciding, and wherein the diameter of the drilling means (16), in particular of a drill (40), is chosen as such that it is bigger than the inner diameter of the tubing end and smaller than the outer diameter of said tubing end,
e) if required, placing a tool guide (50) of the drilling unit (14) into the tubing end,
f) drilling the drilling means into the tubing end, thereby enlarging the inner diameter of said tubing end, in particular for a distance around the width of the tube sheet (124), in particular by moving the heat exchanger towards the apparatus (1), by moving the apparatus (1) towards the heat exchanger and/or by moving the longitudinally moving unit (38) towards the heat exchanger tubings,
g)
i) applying a pushing force onto the tubing and via the drilling means (16) of the drilling unit and/or applying a pulling force to the tubing with a pulling means, in particular a winch, being located in the area behind the tube sheet and behind the heat exchanger, thereby removing the tubing from the tube sheet, or
ii) removing the drilling unit from the enlarged bore hole formed in the tubing end,
introducing a pushing means, in particular a hammer head of an impact hammer, into the tubing end, having a diameter greater than the inner diameter of the tubing end before the drilling operation and smaller than or equal to the diameter of the tubing end after the drilling operation of step f),
applying a pushing force onto the tubing via the pushing means and/or applying a pulling force to the tubing with a pulling means, in particular a winch, being located in the area behind the tubing sheet and behind the heat exchanger, thereby removing the tubing from the tube sheet.

18. A method for the repair of a heat exchanger, in particular of heat exchanger tubings, comprising
the steps a) to f) as of claim 17, and further comprising the following steps
g') removing the drilling unit from the tubing end after having completed the drilling process to enlarge the tubing end,
h') moving the boring unit (8) to another tubing end, in particular an adjacent tubing end and/or, if the tubing end being enlarged in steps a) to f) is part of a U-tube, moving the boring unit (8) to the corresponding tubing end of this U-tube, by moving the second support means (6) up or down and/or by moving the boring unit (8) laterally along the second support means (6),
i') placing the drilling unit (14) of apparatus (1) in front of a tubing end so that the axis of the tubing at least at the tube sheet and the axis of the drilling means (16) of the drilling unit (14) are essentially in parallel, especially coinciding, and wherein the diameter of the drilling means (16), in particular of a drill (40), is chosen as such that it is bigger than the inner diameter of the tubing end and smaller than the outer diameter of said tubing end,
j') if required, placing the tool guide (50) of the drilling unit (14) into the tubing end,
k') drilling the drilling means into the tubing end, thereby enlarging the inner diameter of said tubing end, in particular for a distance around the width of the tube sheet (124), in particular by moving the heat exchanger towards the apparatus (1), by moving the apparatus (1) towards the heat exchanger and/or by moving the longitudinally moving unit (38) towards the heat exchanger tubings,
l')
i) applying a pushing force onto the tubing and via the drilling means (16) of the drilling unit and/or applying a pulling force to the tubing with a pulling means, in particular a winch, being located in the area behind the tube sheet and behind the heat exchanger, thereby removing the tubing from the tube sheet, or
ii) removing the drilling unit from the enlarged bore hole formed in the tubing end,
introducing a pushing means, in particular a hammer head of an impact hammer, into the tubing end, having a diameter greater than the inner diameter of the tubing end before the drilling operation and smaller than or equal to the diameter of the tubing end after the drilling operation of step f),
applying a pushing force onto the tubing via the pushing means and/or applying a pulling force to the tubing with a pulling means, in particular a winch, being located in the area behind the tubing sheet and behind the heat exchanger, thereby removing the tubing from the tube sheet.

19. Method according to claim 17 or 18, further comprising the step of
introducing a new or repaired tubing into the tubing sheet at a tubing sheet hole being generated by removing a tubing which is to be replaced or repaired.

20. Method according to claim 19, wherein
a new or repaired tubing is introduced into the tube sheet such that its ending projects from the front face of tube sheet, especially by a unified predetermined distance.

21. Method according to claims 19 or 20, wherein
a predetermined, in particular unified, distance by which the tubing ends project from the front face of the tube sheet is achieved by applying an apparatus according to claim 10 comprising a tube end facing tool (42).

22. Method according to claim 21, wherein
the tube end facing tool (42) comprises a tool guide (50) at its front part which is introduced into the tubing end, and the tube end facing tool (42) is moved towards the tube end until in contact therewith and part of the tube end is eliminated or removed by the tube end facing tool (42), in particular via a rotational movement, until that part of the tube end which projects from the front face of the tube sheet has a predetermined length.

23. Method according to one of claims 17 to 22 for the repair of a heat exchanger, which comprises a tube sheet comprising a multitude of tubing ends therein at least one of which projects from the front face of the tubing sheet and comprises a seal welding, comprising additionally between steps c) and d) as of claims 17 to 22 the following steps:
c₁) placing the drilling unit which comprises a tool for seal welding removal (44) in front a tube end, if necessary placing a tool guide (50) of the tool for seal welding removal (44) into the tube end,
c₂) directing the tool for seal welding removal (44) towards the tube sheet, thereby eliminating/removing the seal welding which seals the tube and which projects from the front face of the tube sheet as well as said part of the tube end which projects from the front face of the tube sheet, in particular by a rotational movement of the tool for seal welding removal (44) when in contact with the seal welding and/or that part of the tube end which projects from the front face of the tube sheet,
c₃) removal of the tool for seal welding removal (44) after completion of seal welding removal,
c₄) replacing the tool for seal welding removal (44) of the drilling unit (14) by a drill (40), and
commencing with the steps which follow step c) in one of claims 17 to 22.

24. Method according to one of claims 17 to 22 for the repair of a heat exchanger, which comprises a tube sheet comprising a multitude of tubing ends therein at least one which comprises a strength welding being at least partially embedded in the front face of the tube sheet, comprising additionally between steps c) and d) as of claims 17 to 22 the following steps:
c₁₁) placing the drilling unit (14) which comprises a tool for strength welding removal (46) in front of a tube end, if necessary placing a tool guide (50) of the tool for strength welding removal (46) into the tube end,
c₂₂) directing the tool for strength welding removal (46) towards the front face of the tube sheet, in particular with a rotational movement,
c₃₃) eliminating the strength welding, which is at least partially embedded in the front face of the tube sheet around the tube end, in particular by a rotational movement of the tool for strength welding removal (46),
c₄₄) removal of the tool for strength welding removal (46) after completion of the removal of the strength welding,
c₅₅) replacement of the tool for strength welding removal (46) by a drill (40), and
commencing with the steps which follow step c) in one of claims 17 to 22.

25. Use of the apparatus (1) according to one of claims 1 to 16 for the repair of U-bundle heat exchanger, flouting head heat exchanger and/or fix tube sheet heat exchanger.
